# FASCICULE DE BREVET EUROPEEN

(11) **EP 2 501 920 B1**
(45) Date de publication et mention de la délivrance du brevet: **04.05.2016**
(21) Numéro de dépôt: 10787848.0
(22) Date de dépôt: 26.10.2010
(51) Int. Cl.: F02K 1/72

(54) **INVERSEUR DE POUSSÉE**
SCHUBUMKEHRERVORRICHTUNG
THRUST REVERSER

(30) Priorité: 18.11.2009 FR 0905535
(43) Date de publication de la demande: 26.09.2012
(73) Titulaire: Aircelle, 76700 Gonfreville l'Orcher (FR)
(72) Inventeur: VAUCHEL, Guy Bernard, F-76700 Harfleur (FR); CARUEL, Pierre, F-76600 Le Havre (FR); BAILLARD, André, F-76110 Bretteville Du Grand Caux (FR); SEGAT, Peter, F-76600 Le Havre (FR)
(74) Mandataire: Gaillarde, Frédéric F. Ch.
(86) Numéro de dépôt international: PCT/FR2010/052286
(87) Numéro de publication internationale: WO 2011/064479

(56) Documents cités:
- EP-A1- 0 853 192
- FR-A1- 2 911 372
- FR-A1- 2 930 762
- US-B1- 7 484 356

## Description

La présente invention se rapporte à une structure d'inversion de poussée à grilles pour nacelle de turboréacteur.

Un avion est mû par plusieurs turboréacteurs logés chacun dans une nacelle abritant également un ensemble de dispositifs d'actionnement annexés liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en amont du turboréacteur, une section médiane destinée à entourer une soufflante du turboréacteur, une section aval intégrant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue au moins une partie de la veine du flux froid et dirige ce flux vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur.

Une structure commune d'inverseur de poussée comprend un capotage dans lequel est ménagé une ouverture destinée au flux dévié qui, en situation de poussée directe des gaz, est fermée par un capot coulissant et qui, en situation d'inversion de poussée, est dégagée par déplacement en translation vers l'aval (par référence au sens d'écoulement des gaz) du capot coulissant, au moyen de vérins de déplacement du capot coulissant, lesdits vérins de déplacement étant montés sur un cadre du capotage en amont de l'ouverture.

Le capot coulissant est le plus souvent formé de deux demi-capots, de forme sensiblement hémicylindrique, qui sont articulés en partie supérieure (à 12 heures) sur des charnières parallèles à la direction de translation du capot coulissant, et qui sont fermés par des verrous en partie inférieure (à 6 heures).

Cette disposition permet, pour des opérations de maintenance, d'accéder à l'intérieur de la nacelle, et notamment au turboréacteur ou à une structure interne de l'inverseur en ouvrant ces demi-capots.

Afin de résoudre certains problèmes liés à une ouverture en « papillon », une solution d'ouverture en translation a été développée et est notamment décrite dans la demande FR 2 911 372.

En tout état de cause, cette structure de nacelle abritant le dispositif d'inversion de poussée subit en vol des efforts aérodynamiques axiaux tendant à faire reculer la structure par rapport au moteur.

Afin de ne pas reporter ces efforts uniquement sur les points d'attache de la structure d'inverseur au mât, une partie amont de la structure d'inverseur, appelée cadre avant, est liée à la structure du turboréacteur, et plus précisément au carter de soufflante. La liaison s'effectue classiquement par un système couteau / gorge, tel que décrit par exemple dans le document EP 0 845 581, la partie male couteau étant généralement portée par le cadre avant tandis que la partie femelle gorge est portée par le carter de soufflante.

Une autre structure d'inversion de poussée possible comprend un ensemble externe en une seule partie sans rupture en partie inférieur. Une telle structure est appelée structure en O.

Une telle structure est décrite dans le document FR 2 911 372 par exemple.

Dans une structure en O, la structure externe est dissociée de la structure interne entourant le moteur et est translatée vers l'aval, au-delà d'une valeur de recul d'inversion de poussée dans laquelle elle dégage simplement les grilles d'inversion, de manière à permettre un accès au corps moteur.

Quel que soit le mode d'accès de maintenance retenue, structure en C ou structure en O, les grilles de déviation limitent toujours l'accessibilité au coeur de la nacelle. Il est donc nécessaire de les escamoter si l'on souhaite pouvoir donner libre accès au coeur de la nacelle.

Pour ce faire, on connaît certaines réalisations technologiques reposant sur le démontage des grilles pour accéder au capot entourant le corps moteur. Ensuite certaines parties du capot sont démontées pour enfin pouvoir accéder au corps moteur.

De telles manipulations sont longues, peu aisées, et comportent des risques de mauvais remontage d'éléments subissant des efforts en utilisation comme par exemple les grilles ou les panneaux de visites du corps moteur.

On pourra notamment se reporter au document US 2004/0159091 décrivant un ensemble de grilles montées de manière à former un arc de cercle terminé par des rails de coulissement. Une telle solution permet de faciliter la mise en place initiale des grilles avant rattachement au cadre avant. Toutefois, lors d'opération de maintenance, l'accès aux moyens de rattachements au cadre avant reste difficile et le retrait des grilles reste délicat et le risque d'un mauvais remontage des grilles ne peut être totalement écarté. Un autre inverseur de poussée selon l'art antérieur est également divulgué dans le document US 7 484 356.

La présente invention vise à pallier les inconvénients précédemment mentionnés et consiste pour ce faire en un inverseur de poussée pour nacelle de turboréacteur comprenant, d'une part, au moins un capot externe mobile entre une position de fermeture de l'inverseur de poussée et une position d'inversion de poussée, ledit capot mobile étant également ouvrable dans une position dite de maintenance vers laquelle il est articulé et guidé à l'aide de moyens de guidage propres audit capot mobile et situés sensiblement au niveau d'un pylône auquel est destiné à être rattaché la nacelle et d'autre part, au moins un cadre avant adapté pour être monté en aval d'un carter de soufflante dudit turboréacteur et supportant directement ou indirectement au moins un moyen de déviation de flux, caractérisé en ce que le cadre avant est, au moins sur une section dudit cadre avant, d'une part, lié au carter de manière détachable et est, d'autre part, monté de manière mobile en translation le long d'au moins un organe de guidage associé, une fois ledit cadre avant détaché du carter.

Ainsi, en prévoyant un cadre avant lié de manière détachable au carter de soufflante et ensuite translatable, le démontage de l'ensemble en est grandement facilité. De plus, le cadre avant peut-être ainsi simplement reculé pour permettre l'accès à la zone de moteur concernée et remis en place tout aussi simplement, sans nécessiter une dépose complète du cadre avant et des éléments environnants.

La dépose complète du cadre avant et des éléments avoisinants peut alors se limiter aux opérations de maintenance complètes dans lesquelles cela est nécessaire.

Préférentiellement, la totalité du cadre avant est montée de manière détachable et mobile en translation.

De manière avantageuse, la totalité du cadre avant montée détachable et mobile forme un ensemble unitaire. Une telle configuration est particulièrement destinée aux nacelles à structure en O, dans lesquelles la structure externe peut également être un capot coulissant.

Selon une variante préférée de réalisation, les moyens de déviation sont des grilles de déviation.

De manière préférentielle, le cadre avant est monté en aval du carter par un système mâle / femelle du type couteau / gorge. Une telle liaison permet une liaison mécanique optimale tout en étant aisément désengageables avec des moyens appropriés. Bien évidemment, tout moyen de liaison à la portée du métier et répondant à la nécessité de désengagement peut être envisagé.

De manière avantageuse, le cadre avant et les moyens de déviation forment, au moins sur une section, un ensemble unitaire déplaçable en translation lorsque le cadre avant est détaché du carter.

Ainsi, l'ensemble formé par le cadre avant et les moyens de déviation qu'il supporte peut être déplacé en translation d'un seul bloc.

Avantageusement, les organes de guidages associés comprennent un système rail / glissière.

De manière avantageuse les moyens de guidage présentent entre eux un jeu élargi au niveau d'une position de maintenance du cadre avant par rapport à un jeu fonctionnel des moyens de guidage au niveau d'une position active du cadre avant.

Préférentiellement, au moins une partie des moyens de guidage associés sont situés à proximité d'une interface de liaison avec un pylône auquel est destiné à être rattaché la nacelle. Ainsi, la transmission des efforts par les moyens de guidage au niveau du mât est facilitée. On pourra également prévoir au moins un moyen de guidage à l'opposé de ladite interface de liaison, soit en zone six heures pour une nacelle sous aile, et ce notamment pour une nacelle à structure en C possédant une ligne de verrouillage en zone six heures.

Préférentiellement encore, au moins une partie des moyens de guidage associés est destinée à coopérer avec des moyens de guidage complémentaires fixés directement ou indirectement dans ledit pylône.

De manière avantageuse, au moins une partie des moyens de déviation sont détachables du cadre avant et translatables indépendamment de ce dernier. Ainsi, les moyens de déviation peuvent être déplacés indépendamment du cadre avant lorsque le déplacement de ce dernier n'est pas nécessaire.

De manière avantageuse, l'inverseur de poussée comprend un capot externe monté mobile en translation le long d'un axe sensiblement longitudinal de la nacelle, ledit capot mobile étant équipé de moyens de liaison temporaire avec le cadre avant et / ou les moyens de déviation, de manière à entraîner, une fois le cadre avant et / ou les moyens de déviation détachés du carter, la translation de l'ensemble capot mobile, cadre et / ou moyens de déviation lors d'une opération de maintenance.

Préférentiellement, au moins une partie des éléments mobiles, à savoir cadre avant, moyens de déviation, et le cas échéant capot mobile, sont associés à au moins un moyen de centrage et/ou de positionnement par rapport à un autre élément mobile, et/ou à une structure fixe de l'inverseur de poussée.

La présente invention sera mieux comprise à la lumière de la description détaillée qui suit en regard du dessin annexé dans lequel :
- La figure 1 est une représentation schématique générale d'une nacelle de turboréacteur comprenant une structure aval d'inversion de poussée à grilles.
- La figure 2 est une vue schématique en coupe du dispositif d'inversion de poussée équipant la nacelle de la figure 1.
- La figure 3 est une représentation schématique d'une structure de grilles et cadre avant selon l'invention équipant le dispositif d'inversion de poussée de la figure 2.
- Les figures 4 et 5 sont des variantes de réalisation de la structure de grilles et cadre avant équipant un inverseur de poussée selon l'invention.
- La figure 6 est une vue schématique en coupe longitudinale d'un inverseur de poussée selon l'invention et équipé d'un des moyens de centrage des structures translatables.

Dans l'ensemble des figures, on a illustré l'invention par sa mise en oeuvre sur un inverseur à grilles. Bien évidemment, l'invention est applicable à d'autres types d'inverseurs possédant un cadre avant mais utilisant notamment d'autres moyens de déviation telles que des portes de blocages, par exemple.

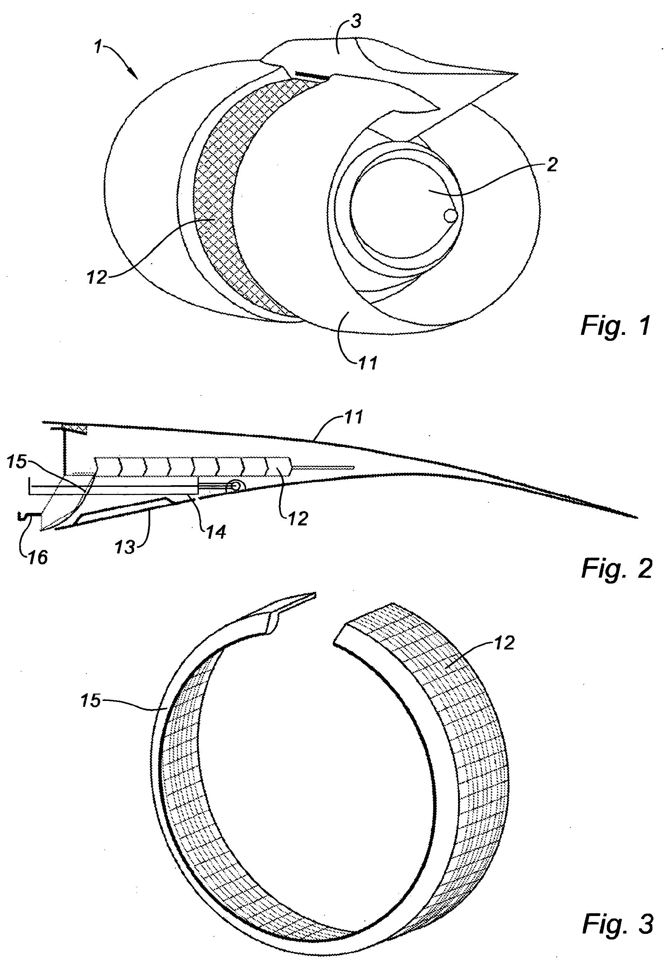

La figure 1 est une représentation schématique générale d'une nacelle 1 de turboréacteur 2 suspendue sous une aile (non représentée) par l'intermédiaire d'un îlôt 3 destiné à servir d'interface avec un mât ou pylône (non représenté).

Cette nacelle 1 se subdivise classiquement en une section amont d'entrée d'air, une section médiane entourant une soufflante (non visible) du turboréacteur 2 et son carter, et une section aval abritant un dispositif d'inversion de poussée et éventuellement une section de tuyère terminale.

La nacelle représentée possède une section aval dite en « O ».

Sur la figure 1, le dispositif d'inversion de poussée est représenté en position déployée, c'est-à-dire qu'un capot externe 11 de la section aval est reculé vers l'aval de la nacelle 1 de manière à dégager une ouverture dans la structure externe de la nacelle 1 et découvrir des grilles de déviation 12 aptes à réorienter une partie du flux d'air généré par le turboréacteur 2 vers l'avant de la nacelle 1 à travers l'ouverture ainsi dégagée.

La figure 2 montre une vue en coupe de la section aval dans lequel le dispositif d'inversion de poussée est en position de fermeture.

Dans ce cas, le capot externe 11 assure la continuité aérodynamique externe de la nacelle avec la section amont et médiane et recouvre les grilles de déviations 12.

Des volets de blocage 13 assurent la continuité aérodynamique interne de la section aval. Lorsque le dispositif d'inversion de poussée est activé, ces volets 13 pivotent pour venir obstruer au moins partiellement une veine de circulation du flux d'air et aider à sa redirection à travers les grilles de déviation 12 et l'ouverture dégagée dans la structure externe de la nacelle 1.

L'activation du dispositif d'inversion de poussée est classiquement effectuée par au moins un actionneur de type vérin 14 apte à entrainer en translation le capot externe 11.

Les grilles de déviation 12 sont supportées par un cadre avant 15 fermant l'épaisseur de la nacelle en amont du capot externe 11 et destiné à être lié mécaniquement au carter de soufflante par l'intermédiaire d'un système de fixation 16, ici de type couteau / gorge mais d'autres systèmes de liaison sont envisageables.

Conformément à l'invention, le cadre avant 15 est équipé de moyens de liaison 16 détachables permettant son désengagement du carter de soufflante et sa translation vers l'aval dans le but de dégager l'accessibilité à l'intérieur de la nacelle 1.

Les moyens de liaison détachables pourront être tout moyen connu, tel que des boulons, des systèmes de verrous, etc.

Ainsi, comme représenté sur la figure 3, l'ensemble cadre avant 15 / grille de déviation 12 peut alors former un ensemble unitaire, tel que représenté par exemple sur la figure 3, déplaçable dans une position de maintenance.

La figure 3 montre que la totalité du cadre avant 15 forme un cerclage déplaçable. Bien évidemment une telle configuration pourra dépendre de la constitution de la nacelle, et notamment si la nacelle possède une section aval en en « O » ou en « C » notamment.

L'ensemble déplaçable pourra être monobloc ou réalisé à partir d'une pluralité de structures liées rigidement entre elles, notamment par boulonnage.

L'ensemble déplaçable pourra également être subdivisé en une pluralité de sections translatables de manière indépendante, ou encore une ou plusieurs sections fixes dans des endroits ne nécessitant pas d'accessibilité particulière.

On notera également que les grilles de déviation 12 peuvent être solidarisées du cadre avant ou montées détachables et déplaçables de manière indépendante.

Les moyens de guidage de l'ensemble déplaçable seront avantageusement situés à proximité de l'interface 3 avec le pylône, ou la zone destinée à recevoir le pylône dans le cas où il n'y a pas d'interface 3 particulière.

Une partie des moyens de guidage pourra être portée directement par le pylône ou mât, ou par l'interface 3, tout comme les moyens de guidage du capot externe 11.

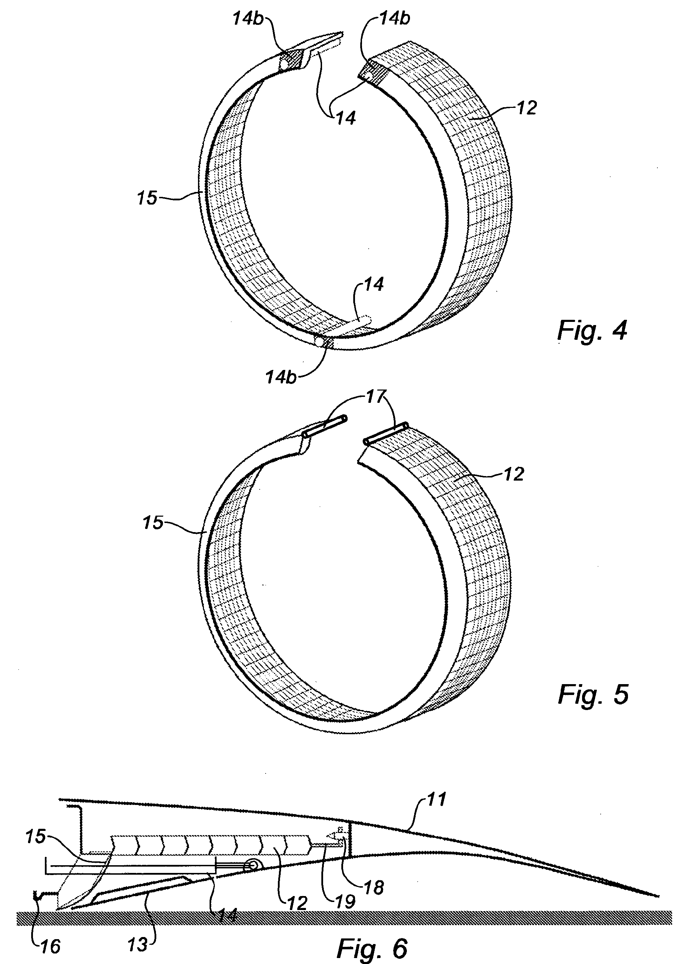

Comme représenté sur la figure 4, l'ensemble du cadre avant 15 translatable pourra également comprendre les vérins 14 d'entraînement du capot mobile externe 11, ces vérins étant supportés par des ferrures 14b du cadre avant 15. En l'espèce, les vérins 14 d'actionnement du dispositif d'inversion de poussée sont au nombre de trois, à savoir deux situés à proximité du pylône et un en zone située à l'opposé, mais leur disposition sera bien évidemment adaptée au dispositif d'inversions de poussée utilisé.

La figure 5 montre un exemple de réalisation et de disposition des moyens de guidage. En l'espèce, les moyens de guidage de l'ensemble cadre avant 15 / grilles de déviations 12 comprennent un ensemble rails / glissières 17, les glissières 17 étant situées à des extrémités de l'ensemble et à proximité de l'interface 3 avec le mât, où à proximité du mât lui-même en l'absence d'interface, les moyens de guidage complémentaires, à savoir les rails étant fixés dans le mât, ou l'interface 3 avec le mât.

Les glissières 17 peuvent être intégrées à la structure de grilles 12 et / ou de cadre avant 15 ou rapportée sur cette dernière.

Bien évidemment, la disposition peut être inversée, à savoir les glissières 17 appartiennent au mât et les rails à la structure cadre avant 15 mobile.

Toutefois, la fixation des glissières 17, et plus particulièrement de coulisseaux, sur la structure mobile cadre avant 15 / grilles 12 permet une meilleure orientation des efforts circonférentielles et de leur reprise et transmission au mât.

Préférentiellement, la section des glissières 17 pourra être sensiblement semi-cylindrique de manière à pouvoir permettre un léger débattement angulaire de la glissière en cas de déformée entre la structure fixe à laquelle l'ensemble mobile est lié.

Les glissières 17 peuvent avoir des longueurs diverses. Elles peuvent notamment s'étendre tout le long de la structure déplaçable formée par le cadre avant, ou seulement sur une partie de cette structure.

Afin qu'il n'y ait pas d'interférence entre le guidage amont (c'est-à-dire à proximité du cadre avant 15) des glissières 17 avec l'attache 16 amont sur le carter de soufflante et risquer une hyperstaticité de la structure, une partie amont des glissières 17 pourra être supprimée.

La distance sans glissière 17 sera fonction de la souplesse relative des structures et des efforts parasite susceptibles s'être supportés par lesdites structures, les efforts subits tendant généralement à un pivotement de l'aval des grilles 12.

On pourra également avantageusement prévoir que les moyens de guidage présentent entre eux un jeu élargi au niveau d'une position de maintenance du cadre avant par rapport à un jeu fonctionnel des moyens de guidage au niveau d'une position active du cadre avant.

Ainsi, en position active, c'est-à-dire lorsque le cadre avant 15 est lié au carter et est susceptible de subir des efforts aérodynamiques tendant à ouvrir la structure et à verser l'aval de ladite structure vers l'extérieur, la liaison rail / glissière 17 sera avantageusement définie avec un jeu minimum dit fonctionnel.

En position de maintenance, c'est-à-dire lorsque le cadre avant 15 est reculé dans une position dans laquelle aucun effort aérodynamique n'est susceptible de s'exercer, la liaison rail / glissière 17 sera avantageusement définie avec un jeu plus important facilitant alors là cinématique de l'ensemble et allégeant les frictions.

Par ailleurs, afin de passer de la position de maintenance (recul) à la position active sans risquer d'interférer avec des composants entre eux, et notamment les composants de guidage, il est préféré d'assurer un recouvrement terminal entre la glissière 17 et le rail correspondant dans la configuration de maintenance. Une longueur de vingt pourcent de la longueur de la glissière 17 sera préférentiellement retenue.

Comme expliqué précédemment, dans certaines configurations de nacelles 1, le capot externe 11 peut être lui-même translatable vers une position de maintenance. Il peut donc être avantageux, lors du passage en position de maintenance de temporairement lier la structure de cadre avant 15 mobile avec le capot externe 11 de manière à translater simultanément les deux ensembles. Là liaison temporaire des deux structures pourra avantageusement se faire par le biais des vérins 14 d'entraînement du capot externe 11 qui sont supportés par le cadre avant 15. Verrouillés en position rétractée, ces vérins 14 peuvent constituer une liaison mécanique d'entraînement des deux structures.

De manière complémentaire, et afin d'éviter tout risque de déplacement lors de la remise en position active de l'élément cadre avant déplaçable, on pourra prévoir des moyens de centrage.

Ces moyens de centrage pourront être disposés sur des structures avoisinantes, fixes ou déplaçables, et pourront se présenter sous la forme, par exemple, de rampes de centrage, de pions de centrage (18, voir figure 6) aptes à coopérer avec des orifices correspondants (19) porté par l'autre structure, entre autres.

L'ensemble d'inversion déplaçable (cadre avant 15 et grilles 12) est préférentiellement maintenu sensiblement centré à l'intérieur du capot mobile 11 lors du déplacement en position de maintenance. En effet, une liaison mécanique tel qu'évoquée précédemment permet d'assurer un centrage sensiblement concentrique des deux structures déplaçables.

La dépose de ces ensembles en est donc facilitée. De même l'ensemble des deux structures reste unitaire et se stocke plus facilement.

Dans le cas où ce centrage est assuré, le rail peut être raccourci et n'intéresser qu'une partie de recouvrement de la glissière 17 en position active.

Pour ajouter à la fiabilité de remontage, les moyens de guidage pourront être équipés de rampes de centrage, préférentiellement portées par les glissières 17 sous la forme d'une extrémité biseautée.

En effet, préférentiellement, la mise en place du capot externe 11 s'effectue dans ses rails de guidage avant que la structure d'inversion cadre avant 15 et grilles 11 ne soit introduites dans leur rails. Il peut donc se produire un décentrage des glissières 17. Les rampes de centrage permettent de présenter les glissières 17 sans contraintes.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Inverseur de poussée (1) pour nacelle de turboréacteur comprenant, d'une part, au moins un capot externe (11) mobile entre une position de fermeture de l'inverseur de poussée et une position d'inversion de poussée, ledit capot mobile étant également ouvrable dans une position dite de maintenance vers laquelle il est articulé et guidé à l'aide de moyens de guidage propres audit capot mobile et situés sensiblement au niveau d'un pylône auquel est destiné à être rattaché la nacelle et d'autre part, au moins un cadre avant (15) adapté pour être monté en aval d'un carter de soufflante dudit turboréacteur et supportant directement ou indirectement au moins un moyen de déviation de flux (12), **caractérisé en ce que** le cadre avant est, au moins sur une section dudit cadre avant, d'une part, lié au carter de manière détachable et est, d'autre part, monté de manière mobile en translation le long d'au moins un organe de guidage associé (17), une fois ledit cadre avant détaché du carter.

2. Inverseur de poussée (1) selon la revendication 1, **caractérisé en ce que** la totalité du cadre avant (15) est monté de manière détachable et mobile en translation.

3. Inverseur de poussée (1) selon la revendication 2, **caractérisé en ce que** la totalité du cadre avant (15) monté détachable et mobile forme un ensemble unitaire.

4. Inverseur de poussée (1) selon l'une quelconque des revendications 1 à 3, **caractérisé en ce que** les moyens de déviation sont des grilles de déviation (12).

5. Inverseur de poussée (1) selon l'une quelconque des revendications 1 à 4, **caractérisé en ce que** le cadre avant (15) est monté en aval du carter par un système mâle / femelle du type couteau (16) / gorge.

6. Inverseur de poussée (1) selon l'une quelconque des revendications 1 à 3, **caractérisé en ce que** le cadre avant (15) et les moyens de déviation (12) forment, au moins sur une section, un ensemble unitaire déplaçable en translation lorsque le cadre avant est détaché du carter.

7. Inverseur de poussée (1) selon l'une quelconque des revendications 1 à 4, **caractérisé en ce que** les organes de guidages associés comprennent un système rail / glissière (17).

8. Inverseur de poussée (1) selon l'une quelconque des revendications 1 à 7, **caractérisé en ce que** les moyens de guidage (17) présentent entre eux un jeu élargi au niveau d'une position de maintenance du cadre avant (15) par rapport à un jeu fonctionnel des moyens de guidage au niveau d'une position active du cadre avant.

9. Inverseur de poussée (1) selon l'une quelconque des revendications 1 à 8, **caractérisé en ce qu'**au moins une partie des moyens de guidage (17) associés sont situés à proximité d'une interface de liaison avec un pylône (3) auquel est destiné à être rattaché la nacelle.

10. Inverseur de poussée (1) selon la revendication 9, **caractérisé en ce qu'**au moins une partie des moyens de guidage associés est destinée à coopérer avec des moyens de guidage complémentaires fixés directement ou indirectement dans ledit pylône (3).

11. Inverseur de poussée (1) selon l'une quelconque des revendications 1 à 10, **caractérisé en ce qu'**au moins une partie des moyens de déviation (12) sont détachables du cadre avant (15) et translatables indépendamment de ce dernier.

12. Inverseur de poussée (1) selon l'une quelconque des revendications 1 à 11, **caractérisé en ce que** le capot externe (11) est mobile en translation le long d'un axe sensiblement longitudinal de la nacelle et est équipé de moyens de liaison temporaire avec le cadre avant (15) et / ou les moyens de déviation (12), de manière à entraîner, une fois le cadre avant et / ou les moyens de déviation détachés du carter, la translation de l'ensemble capot mobile, cadre et / ou moyens de déviation lors d'une opération de maintenance.

13. Inverseur de poussée (1) selon l'une quelconque des revendications 1 à 12, **caractérisé en ce que** au moins une partie des éléments mobiles, à savoir cadre avant (15), moyens de déviation (12), et capot mobile (11), sont associés à au moins un moyen de centrage (18, 19) et/ou de positionnement par rapport à un autre élément mobile, et/ou à une structure fixe de l'inverseur de poussée.

## Patentansprüche

1. Schubumkehr (1) für eine Turbotriebwerksgondel, einerseits zumindest eine äußere Abdeckung (11) umfassend, die zwischen einer Schließposition der Schubumkehr und einer Schubumkehrposition bewegt werden kann, wobei die besagte bewegliche Abdeckung auch in eine sogenannte Wartungsposition geöffnet werden kann, in die sie angelenkt ist, und mithilfe von Führungsmitteln geführt wird, die der besagten beweglichen Abdeckung eigen sind, und sich in etwa im Bereich eines Trägermastes befinden, an dem die Gondel befestigt werden soll, und andererseits zumindest einen vorderen Rahmen (15), der angepasst ist, um strömungsabwärts von einem Gebläsegehäuse des besagten Turbotriebwerks montiert zu werden und direkt oder indirekt zumindest ein Mittel zur Strömungsumlenkung (12) trägt, **dadurch gekennzeichnet, dass** der vordere Rahmen zumindest in einem Abschnitt des besagten vorderen Rahmens einerseits in abnehmbarer Form mit dem Gehäuse verbunden ist, und andererseits entlang zumindest eines zugeordneten Führungselements (17) verschiebbar montiert ist, sobald der besagte vordere Rahmen vom Gehäuse gelöst ist.

2. Schubumkehr (1) nach Anspruch 1, **dadurch gekennzeichnet, dass** der gesamte vordere Rahmen (15) in lösbarer Form und verschiebbar montiert ist.

3. Schubumkehr (1) nach Anspruch 2, **dadurch gekennzeichnet, dass** der gesamte vordere Rahmen (15), der lösbar und beweglich montiert ist, eine einheitliche Baugruppe bildet.

4. Schubumkehr (1) nach irgendeinem der Ansprüche 1 bis 3, **dadurch gekennzeichnet, dass** die Mittel zur Umlenkung Umlenkgitter (12) sind.

5. Schubumkehr (1) nach irgendeinem der Ansprüche 1 bis 4, **dadurch gekennzeichnet, dass** der vordere Rahmen (15) strömungsabwärts vom Gehäuse durch ein männliches / weibliches System in der Art einer Feder (16) / Nut montiert ist.

6. Schubumkehr (1) nach irgendeinem der Ansprüche 1 bis 3, **dadurch gekennzeichnet, dass** der vordere Rahmen (15) und die Mittel zur Umlenkung (12) zumindest in einem Abschnitt eine einheitliche Baugruppe bilden, die verschoben werden kann, wenn der vordere Rahmen vom Gehäuse gelöst ist.

7. Schubumkehr (1) nach irgendeinem der Ansprüche 1 bis 4, **dadurch gekennzeichnet, dass** die zugeordneten Führungselemente ein Schienen- / Gleitschienensystem (17) umfassen.

8. Schubumkehr (1) nach irgendeinem der Ansprüche 1 bis 7, **dadurch gekennzeichnet, dass** die Führungsmittel (17) zwischen sich ein erweitertes Spiel im Bereich einer Wartungsposition des vorderen Rahmens (15) im Verhältnis zu einem funktionellen Spiel der Führungsmittel im Bereich einer aktiven Position des vorderen Rahmens aufweisen.

9. Schubumkehr (1) nach irgendeinem der Ansprüche 1 bis 8, **dadurch gekennzeichnet, dass** sich zumindest ein Teil der zugeordneten Führungsmittel (17) in der Nähe einer Verbindungsschnittstelle mit einem Trägermasten (3) befinden, an dem die Gondel befestigt werden soll.

10. Schubumkehr (1) nach Anspruch 9, **dadurch gekennzeichnet, dass** zumindest ein Teil der zugeordneten Führungsmittel dazu bestimmt ist, mit ergänzenden Führungsmitteln zusammenzuwirken, die direkt oder indirekt am besagten Trägermasten (3) befestigt sind.

11. Schubumkehr (1) nach irgendeinem der Ansprüche 1 bis 10, **dadurch gekennzeichnet, dass** zumindest ein Teil der Mittel zum Umlenken (12) vom vorderen Rahmen (15) lösbar sind und unabhängig von diesem letzteren verschoben werden können.

12. Schubumkehr (1) nach irgendeinem der Ansprüche 1 bis 11, **dadurch gekennzeichnet, dass** die äußere Abdeckung (11) entlang einer in etwa in Längsrichtung verlaufenden Achse der Gondel verschoben werden kann, und mit Mitteln zur vorübergehenden Verbindung mit dem Rahmen (15) und/ oder den Mitteln zum Umlenken (12) ausgestattet ist, um bei einem Wartungsvorgang, sobald der vordere Rahmen und/ oder die Mittel zum Umlenken vom Gehäuse gelöst sind, für den Vorschub der Baugruppe der beweglichen Abdeckung, Rahmen und / oder Mittel zum Umlenken zu sorgen.

13. Schubumkehr (1) nach irgendeinem der Ansprüche 1 bis 12, **dadurch gekennzeichnet, dass** zumindest ein Teil der beweglichen Elemente, nämlich der vordere Rahmen (15), die Mittel zum Umlenken (12), und die bewegliche Abdeckung (11) zumindest einem Zentriermittel (18, 19) und/ oder Positioniermittel im Verhältnis zu einem anderen beweglichen Element, und/ oder einer festen Struktur der Schubumkehr zugeordnet sind.

## Claims

1. A thrust reverser (1) for a turbojet engine nacelle comprising, on the one hand, at least one outer cowl (11) movable between a closed position of the thrust reverser and a thrust reversal position, said movable cowl also being able to be opened in a so-called maintenance position towards which it is hinged and guided through guide means proper to said movable cowl and substantially located at a pylon to which the nacelle is intended to be attached, and on the other hand, at least a front frame (15) adapted to be mounted downstream of a fan casing of said turbojet engine and directly or indirectly supporting at least one flow diverting means (12), **characterized in that** the front frame, at least on a section of said front frame, on the one hand, detachably connected to the casing and is, on the other hand, movably mounted in translation along at least one associated guide member (17), once said front frame is detached from the casing.

2. The thrust reverser (1) according to claim 1, **characterized in that** the entire front frame (15) is detachably and movably mounted in translation.

3. The thrust reverser (1) according to claim 2, **characterized in that** the entire front frame (15) detachably and movably mounted forms a unitary assembly.

4. The thrust reverser (1) according to any one of claims 1 to 3, **characterized in that** the diverting means are cascade vanes (12).

5. The thrust reverser (1) according to any one of claims 1 to 4, **characterized in that** the front frame (15) is mounted downstream of the casing by a male/female system of the knife (16)/groove type.

6. The thrust reverser (1) according to any one of claims 1 to 3, **characterized in that** the front frame (15) and the diverting means (12) form, at least on a section, a unitary assembly which can be displaced in translation when the front frame is detached from the casing.

7. The thrust reverser (1) according to any one of claims 1 to 4, **characterized in that** the associated guide members comprise a rail/guide rail system (17).

8. The thrust reverser (1) according to any one of claims 1 to 7, **characterized in that** the guide means (17) have between each other an enlarged clearance at a maintenance position of the front frame (15) with respect to an operation clearance of the guide means at an active position of the front frame.

9. The thrust reverser (1) according to any one of claims 1 to 8, **characterized in that** at least one portion of the associated guide means (17) are located near a connection interface with a pylon ( 3) to which the nacelle is intended to be attached.

10. The thrust reverser (1) according to claim 9, **characterized in that** at least one portion of the associated guide means is intended to cooperate with complementary guide means directly or indirectly fastened in said pylon (3).

11. The thrust reverser (1) according to any one of claims 1 to 10, **characterized in that** at least one portion of the diverting means (12) is detachable from the front frame (15) and can translate independently of the latter.

12. The thrust reverser (1) according to any one of claims 1 to 11, **characterized in that** the outer cowl (11) is movable in translation along a substantially longitudinal axis of the nacelle and is equipped with temporary connection means with the front frame (15) and/or the diverting means (12), so as to drive, once the front frame and/or the diverting means are detached from the casing, the translation of the assembly of movable cowl, frame and/or diverting means during a maintenance operation.

13. The thrust reverser (1) according to any one of claims 1 to 12, **characterized in that** at least one portion of the movable elements, namely the front frame (15), the diverting means (12), and the movable cowl (11 ), is associated with at least one balance (18, 19) and/or positioning means with respect to another movable element, and/or a fixed structure of the thrust reverser.
